# EUROPEAN PATENT APPLICATION

(11) **EP 3 628 382 A1**
(43) Date of publication of application: **01.04.2020**
(21) Application number: 18214992.2
(22) Date of filing: 21.12.2018
(51) Int. Cl.: A63F 13/655, A63F 13/63

(54) **AVATAR ESTABLISHING METHOD AND AVATAR ESTABLISHING DEVICE**

(30) Priority: 25.09.2018 US 201816140567
(71) Applicant: XRSpace CO., LTD., Taoyuan City 330 (TW)
(72) Inventor: Chou, Peter, 100 Taipei City (TW); Chu, Feng-Seng, 235 New Taipei City (TW); Lin, Ting-Chieh, 220 New Taipei City (TW); Wang, Chuan-Chang, 116 Taipei City (TW)
(74) Representative: Straus, Alexander

(57) **Abstract**

An avatar establishing method (20) applied in an avatar establishing device (10) is provided. The avatar establishing method (20) comprises receiving a picture (PIC) including a face (202); obtaining a plurality of initial avatar parameters (P_{0,l}-P_{n,l}) corresponding to the picture (PIC) (204); receiving a plurality of adjustments (ADJ₀-ADJₙ) inputted by a user (206); obtaining a plurality of adjusted avatar parameters (P_{0,AD}-P_{n,AD}) according to the plurality of initial avatar parameters (P_{0,l}-P_{n,l}) and the plurality of adjustments (ADJ₀-ADJₙ) (208); and generating an adjusted avatar (AAVT) according to the plurality of adjusted avatar parameters (P_{0,AD}-P_{n,AD}) (210).

## Description

### Field of the Invention

The present disclosure relates to an avatar establishing method and an avatar establishing device, and more particularly, to an avatar establishing method and an avatar establishing device capable of generating a user favorite avatar quickly.

### Background of the Invention

Avatar, as an image representing one person/user in a cyberspace, is widely used in various applications such as a video game or a virtual reality (VR), an augmented reality (AR), a mixed reality (MR), an extended reality (XR), etc.

Traditionally, a prototype avatar may be generated, and the user/player may edit the prototype avatar using some avatar editing tool. However, when the favorite avatar, which the user likes to represent, is far from the prototype avatar, the user needs to spend plenty of time and efforts to edit the avatar.

Therefore, how to quickly establish a favorite avatar which the user likes is a significant objective in these field.

### Summary of the Invention

This in mind, the application aims at providing an avatar establishing method and an avatar establishing device capable of generating a user favorite avatar quickly to solve the abovementioned problem.

This is achieved by an avatar establishing method and an avatar establishing device according to claims 1 and 6. The dependent claims pertain to corresponding further developments and improvements.

As will be seen more clearly from the detailed description following below, an embodiment of the present disclosure discloses an avatar establishing method applied in an avatar establishing device. The avatar establishing method comprises the steps of receiving a picture including a face; obtaining a plurality of initial avatar parameters corresponding to the picture; receiving a plurality of adjustments inputted by a user; obtaining a plurality of adjusted avatar parameters according to the plurality of initial avatar parameters and the plurality of adjustments; and generating an adjusted avatar according to the plurality of adjusted avatar parameters.

An embodiment of the present disclosure further discloses an avatar establishing device. The avatar establishing device comprises a processing unit; and a storage unit, coupled to the processing unit and configured to store a program code. The program code instructs the processing unit to perform the following steps receiving a picture including a face; obtaining a plurality of initial avatar parameters corresponding to the picture; receiving a plurality of adjustments inputted by a user; obtaining a plurality of adjusted avatar parameters according to the plurality of initial avatar parameters and the plurality of adjustments; and generating an adjusted avatar according to the plurality of adjusted avatar parameters.

### Brief Description of the Drawings

FIG. 1 is a schematic diagram of an avatar establishing device according to an embodiment of the present disclosure.
FIG. 2 is a schematic diagram of a process according to an embodiment of the present disclosure.

### Detailed Description

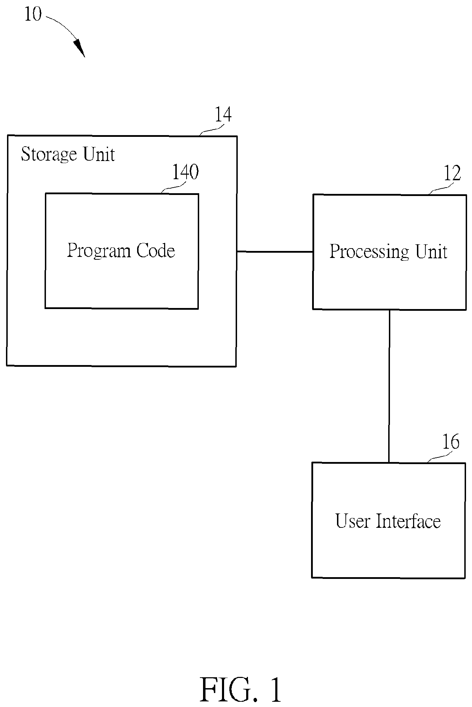

FIG. 1 is a schematic diagram of an avatar establishing device 10 according to an embodiment of the present disclosure. The avatar establishing device 10 is configured to establish an avatar, an image representing one person/user in a cyberspace or an application, e.g., a video game or a virtual reality (VR), an augmented reality (AR), a mixed reality (MR), an extended reality (XR), etc. In an embodiment, the avatar establishing device 10 may be disposed within a VR/AR/MR/XR device.

The avatar establishing device 10 comprises a processing unit 12, a storage unit 14 and a user interface 16. The processing unit 12 may be, but not limited to, a processor, such as a central processing unit, an application processor, a microprocessor, etc., or may be realized by an application specific integrated circuit (ASIC). The storage unit 14 may be a subscriber identity module (SIM), read-only memory (ROM), flash memory, random-access memory (RAM), CD-ROMs, magnetic tape, hard disk, and optical data storage device, but not limited thereto. The storage unit 14, coupled to the processing unit 12, is configured to store a program code 140. The user interface 16 is configured to receive input information from a user/player. The user interface 16, coupled to the processing unit 12, may comprises a gesture recognition module, a voice recognition module, an eye tracking module, a keyboard, a touch panel, etc.

Different from the avatar establishing device of the prior art, the avatar establishing device 10 is able to establish the avatar based on an inputted photograph and allow the user/player to edit the photograph-based avatar.

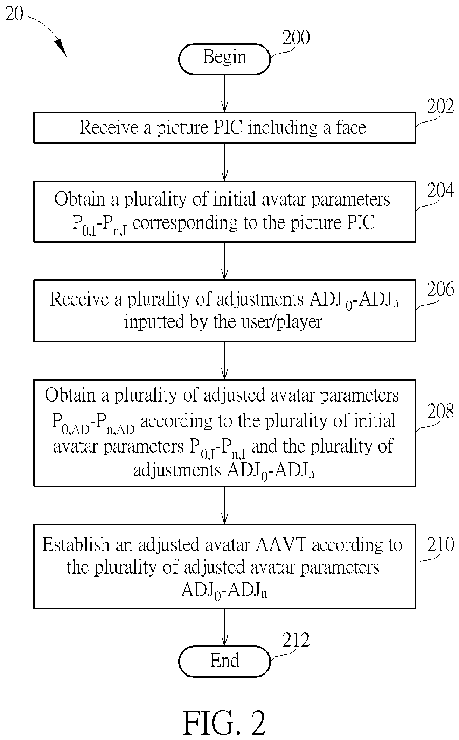

Please refer to FIG. 2. FIG. 2 is a schematic diagram of a process 20 according to an embodiment of the present disclosure. The process 20 may be compiled as the program code 140 and be executed by the processing unit 12. The process 20 comprises the following steps:
Step 200: Begin.
Step 202: Receive a picture PIC including a face.
Step 204: Obtain a plurality of initial avatar parameters P_{0,I}-P_{n,I} corresponding to the picture PIC.
Step 206: Receive a plurality of adjustments ADJ₀-ADJₙ inputted by the user/player.
Step 208: Obtain a plurality of adjusted avatar parameters P_{0,AD}-P_{n,AD} according to the plurality of initial avatar parameters P_{0,I}-P_{n,I} and the plurality of adjustments ADJ₀-ADJₙ.
Step 210: Establish an adjusted avatar AAVT according to the plurality of adjusted avatar parameters ADJ₀-ADJₙ.
Step 212: End.

In Step 200, the processing unit 12 may establish a prototype avatar. The prototype avatar may be corresponding to a plurality of default avatar parameters P_{0,D}-P_{n,D}. The avatar parameters in the present disclosure are referred to an eye size, an eye shape, a nose size, a nose shape, a mouth size, a mouth shape, a chin size, a jaw size, etc. In an embodiment, the processing unit 12 may obtain the plurality of default avatar parameters P_{0,D}-P_{n,D} first, and generate the prototype avatar according to the plurality of default avatar parameters P_{0,D}-P_{n,D}.

In Step 202, the processing unit 12 receives the picture PIC including a human face. The picture PIC may be selected by the user/player and inputted to the processing unit 12. The human face may present the user himself/herself, or may present a user favorite person. In an embodiment, the user/player may input a file (e.g., JPEG file or BMP file) of the picture PIC through a memory unit like a memory card or an USB hard driver, or through a wireline/wireless connection such as an Ethernet connection, a bluetooth connection or a Wi-Fi connection, which is not limiter therein. In an embodiment, the user/player may utilize a camera module embedded within the avatar establishing device 10 to capture the picture PIC, wherein the camera module embedded within the avatar establishing device 10 lens or pixel sensing array to capture an image/picture as the picture PIC.

In Step 204, the processing unit 12 obtains the plurality of initial avatar parameters P_{0,I}-P_{n,I}, where the initial avatar parameters P_{0,I}-P_{n,I} are the avatar parameters corresponding to the picture PIC. In an embodiment, to establish a three-dimensional (3D) image, the processing unit 12 may perform a multi-view photo face modeling operation, to obtain the plurality of initial avatar parameters P_{0,I}-P_{n,I} corresponding to the picture PIC. Details of the multi-view photo face modeling operation are known by the art. For example, the processing unit 12 may utilize a morphing face model to fit the picture PIC inputted by the user/player, and therefore, a 3D avatar face model corresponding to the human face in the picture PIC is established, where the 3D avatar face model includes the initial avatar parameters P_{0,I}-P_{n,I}. In addition, an animation character model may be included into the 3D avatar face model.

Once the plurality of initial avatar parameters P_{0,I}-P_{n,I} is obtained, in an embodiment, the processing unit 12 may present an initial avatar, as an image, to the user/player according to the initial avatar parameters P_{0,I}-P_{n,I}. After the user/player sees the initial avatar, the user/player may edit the avatar based on the initial avatar. That is, the user/player may input the plurality of adjustments ADJ₀-ADJₙ corresponding to the avatar parameters through the user interface 16. Thus, in Step 206, the processing unit 12 receives the adjustments ADJ₀-ADJₙ from the user/player through the user interface 16. The user/player may input the plurality of adjustments ADJ₀-ADJₙ through in input interface, e.g., a mouse device, a keyboard, a touch panel, a voice controlling/recognition system, a gesture recognition system, a iris controlling/recognition system and the like.

In Step 208, the processing unit 12 obtains the plurality of adjusted avatar parameters P_{0,AD}-P_{n,AD} according to the plurality of initial avatar parameters P_{0,I}-P_{n,I} and the plurality of adjustments ADJ₀-ADJₙ. In an embodiment, the processing unit 12 may generate the adjusted avatar parameter P_{i,AD} as the initial avatar parameters P_{i,I} plus/minus the adjustment ADJᵢ, which is not limited thereto.

In Step 210, the processing unit 12 establishes the adjusted avatar AAVT, as an image, according to the plurality of adjusted avatar parameters ADJ₀-ADJₙ, where the adjusted avatar parameters ADJ₀-ADJₙ are the avatar parameters corresponding to the adjusted avatar AAVT.

The adjusted avatar AAVT may be edited by the user/player, based on the human face within the picture PIC. That is, the avatar establishing device 10 is able to not only establish the avatar based on the inputted photograph, i.e., the picture PIC, but also allow the user/player to edit the photograph-based avatar, to generate the adjusted avatar AAVT eventually.

In the prior art, the user favorite avatar may be far from the prototype avatar, and the user needs to spend plenty of time and effort to edit the avatar. On the other hand, the present disclosure allows the user to input the picture PIC which may be closer to the user favorite avatar than the prototype avatar, and also allows the user to edit the initial avatar corresponding to the human face within the picture PIC. Therefore, the present disclosure would spare time and effort of editing the avatar.

In summary, the present disclosure receives the user inputted picture PIC to generate the initial avatar, and also allows the user to edit the initial avatar. Therefore, the present disclosure would spare time and effort of editing the avatar.

## Claims

1. An avatar establishing method (20), applied in an avatar establishing device (10), the avatar establishing method (20) **characterized by** comprising:
receiving a picture (PIC) including a face (202);
obtaining a plurality of initial avatar parameters (P_{0,I}-P_{n,I}) corresponding to the picture (PIC) (204);
receiving a plurality of adjustments (ADJ₀-ADJₙ) inputted by a user (206);
obtaining a plurality of adjusted avatar parameters (P_{0,AD}-P_{n,AD}) according to the plurality of initial avatar parameters (P_{0,I}-P_{n,I}) and the plurality of adjustments (ADJ₀-ADJₙ) (208); and
generating an adjusted avatar (AAVT) according to the plurality of adjusted avatar parameters (P_{0,AD}-P_{n,AD}) (210).

2. The avatar establishing method (20) of claim 1, **characterized by** comprising:
generating an initial avatar according to the plurality of initial avatar parameters (P_{0,I}-P_{n,I}).

3. The avatar establishing method (20) of claim 1, **characterized by** further comprising:
obtaining a plurality of default avatar parameters (P_{0,D}-P_{n,D}).

4. The avatar establishing method (20) of claim 3, **characterized by** further comprising:
generating a prototype avatar according to the plurality of default avatar parameters (P_{0,D}-P_{n,D}).

5. The avatar establishing method (20) of claim 1, **characterized in that** the plurality of initial avatar parameters (P_{0,I}-P_{n,I}) and the plurality of adjusted avatar parameters (P_{0,AD}-P_{n,AD}) are an eye size, an eye shape, a nose size, a nose shape, a mouth size, a mouth shape, a chin size, or a jaw size.

6. An avatar establishing device (10), **characterized by** comprising:
a processing unit (12); and
a storage unit (14), coupled to the processing unit (12), configured to store a program code (140), wherein the program code (140) instructs the processing unit (12) to perform the following steps:
receiving a picture (PIC) including a face (202);
obtaining a plurality of initial avatar parameters (P_{0,I}-P_{n,I}) corresponding to the picture (PIC) (204);
receiving a plurality of adjustments (ADJ₀-ADJₙ) inputted by a user (206);
obtaining a plurality of adjusted avatar parameters (P_{0,AD}-P_{n,AD}) according to the plurality of initial avatar parameters (P_{0,I}-P_{n,I}) and the plurality of adjustments (ADJ₀-ADJₙ) (208); and
generating an adjusted avatar (AAVT) according to the plurality of adjusted avatar parameters (P_{0,AD}-P_{n,AD}) (210).

7. The avatar establishing device (10) of claim 6, **characterized in that** the program code (140) further instructs the processing unit (12) to perform following steps:
generating an initial avatar according to the plurality of initial avatar parameters (P_{0,I}-P_{n,I}).

8. The avatar establishing device (10) of claim 6, **characterized in that** the program code (140) further instructs the processing unit (12) to perform following steps:
obtaining a plurality of default avatar parameters (P_{0,D}-P_{n,D}).

9. The avatar establishing device (10) of claim 8, **characterized in that** the program code (140) further instructs the processing unit (12) to perform following steps:
generating a prototype avatar according to the default avatar parameters (P_{0,D}-P_{n,D}).

10. The avatar establishing device (10) of claim 6, **characterized in that** the plurality of initial avatar parameters (P_{0,I}-P_{n,I}) and the plurality of adjusted avatar parameters (P_{0,AD}-P_{n,AD}) are an eye size, an eye shape, a nose size, a nose shape, a mouth size, a mouth shape, a chin size, or a jaw size.
